(19) Europäisches Patentamt
European Patent Office
Office européen des brevets

(11) **EP 3 734 325 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **20157291.4**

(22) Anmeldetag: **14.02.2020**

(51) Internationale Patentklassifikation (IPC):
**G01S 7/40** *(2006.01)* **G01S 13/82** *(2006.01)*

(52) Gemeinsame Patentklassifikation (CPC):
**G01S 7/4056; G01S 13/82;** G01S 7/4082

(54) **RADARTRANSPONDER-ANORDNUNG ZUR ERZEUGUNG EMULIERTER SIGNALE VON RADARZIELEN UND ENTSPRECHENDES VERFAHREN**

RADAR TRANSPONDER ARRANGEMENT FOR GENERATING EMULATED RADAR TARGET SIGNALS AND CORRESPONDING METHOD

TRANSPONDEUR RADAR PERMETTANT DE GÉNÉRER DES SIGNAUX ÉMULÉS DE CIBLES RADAR ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2019 DE 102019111300**

(43) Veröffentlichungstag der Anmeldung:
**04.11.2020 Patentblatt 2020/45**

(73) Patentinhaber: **Rohde & Schwarz GmbH & Co. KG 81671 München (DE)**

(72) Erfinder:
• **Schütz, Martin**
**85579 Neubiberg (DE)**
• **Vossiek, Martin**
**90766 Fürth (DE)**

(74) Vertreter: **Rupp, Christian et al**
**Mitscherlich PartmbB**
**Patent- und Rechtsanwälte**
**Sonnenstraße 33**
**80331 München (DE)**

(56) Entgegenhaltungen:
• **SCHEIBLHOFER WERNER ET AL: "A low-cost multi-target simulator for FMCW radar system calibration and testing", 2017 47TH EUROPEAN MICROWAVE CONFERENCE (EUMC), EUROPEAN MICROWAVE ASSOCIATION, 10. Oktober 2017 (2017-10-10), Seiten 1191-1194, XP033284843, DOI: 10.23919/EUMC.2017.8231062 [gefunden am 2017-12-19]**
• **REHAMMAR ROBERT ET AL: "Design of a Sensor Agnostic FMCW-Compatible Transponder for Automotive Applications", 2018 IEEE CONFERENCE ON ANTENNA MEASUREMENTS & APPLICATIONS (CAMA), IEEE, 3. September 2018 (2018-09-03), Seiten 1-4, XP033444270, DOI: 10.1109/CAMA.2018.8530595 [gefunden am 2018-11-09]**

**Beschreibung**

GEBIET DER ERFINDUNG

Die Erfindung betrifft eine Radartransponder-Anordnung zur Erzeugung emulierter Signale von Radarzielen sowie ein entsprechendes Verfahren.

HINTERGRUND

Aufgrund einer steigenden Anzahl an autonomen Fahrzeugen und der damit verbundenen Notwendigkeit, zuverlässige Automobilradare zur Verfügung zu stellen, wächst der Bedarf an entsprechenden Radartransponder-Anordnungen sowie Verfahren zur Erzeugung emulierter Signale von Radarzielen, mithilfe derer die korrekte Funktionalität derartiger Automobilradare getestet werden kann.

Die US 3,792,475 zeigt einen mit einem S-, C- und X-Band-Oszillator kombinierten Radarzielsimulator. Nachteilhafterweise ist dieser Radarzielsimulator aufgrund seiner Komplexität nicht nur aufwendig und teuer in seiner Realisierung, sondern führt infolge entsprechend vieler Fehlerquellen auch zu inexakten Radarzielsimulationen.

SCHEIBLHOFER WERNER ET AL, "A low-cost multi-target simulator for FMCW radar system calibration and testing", 2017 47TH EUROPEAN MICROWAVE CONFERENCE (EUMC), EUROPEAN MICROWAVE ASSOCIATION, offenbart einen Radarzielsimulator, der mehrere künstliche Ziele simulieren kann.

REHAMMAR ROBERT ET AL, "Design of a Sensor Agnostic FMCW-Compatible Transponder for Automotive Applications", 2018 IEEE CONFERENCE ON ANTENNA MEASUREMENTS & APPLICATIONS (CAMA), IEEE, offenbart das Design und die Simulation eines Millimeterwellen-Radartransponders.

AUFGABE UND LÖSUNG

Demnach ist es Aufgabe der Erfindung, eine Radartransponder-Anordnung sowie ein Verfahren zur Erzeugung emulierter Signale von Radarzielen bereitzustellen, wobei entsprechende Radarziele nicht nur besonders exakt simuliert werden können, sondern die Realisierung einer solchen Radartransponder-Anordnung bzw. eines entsprechenden Verfahrens besonders einfach und kosteneffizient erreicht werden kann.

Die Aufgabe wird bezüglich der Radartransponder-Anordnung durch die Merkmale des Patentanspruchs 1 gelöst. Die Aufgabe wird bezüglich des Verfahrens zur Erzeugung emulierter Signale von Radarzielen durch die Merkmale des Patentanspruchs 6 gelöst. Die Unteransprüche enthalten vorteilhafte Weiterbildungen.

AUSFÜHRLICHE BESCHREIBUNG DER ERFINDUNG

Gemäß einem ersten Aspekt der Erfindung wird eine Radartransponder-Anordnung zur Erzeugung emulierter Signale von Radarzielen geschaffen. Die Radartransponder-Anordnung weist eine Empfangseinheit zum Empfangen eines Radarsignals, einen Signalgenerator zur Generierung eines Steuersignals zur Erzeugung eines Modulationssignals zur Modulation des empfangenen Radarsignals und eine Sendeeinheit zum Zurücksenden des modulierten Signals auf. In diesem Kontext ist das Modulationssignal mehrwertig in seinem zeitlichen Signalverlauf vorgebbar, wobei für ein bewegtes Ziel, die Modulation eines statischen Ziels und zusätzlich eine Frequenzänderung über die Zeit verwendet wird, wobei dies für Ziele mit konstanter Bewegung eine affinlineare Funktion und für beschleunigte Ziele eine nichtlineare Funktion ist. Vorteilhafterweise können so Radarziele nicht nur besonders exakt, sondern auch sehr realistisch simuliert werden.

Gemäß einer ersten bevorzugten Ausführungsform des ersten Aspekts der Erfindung ist das Modulationssignal nicht monofrequent. Ferner mag das Modulationssignal bifrequent, vorzugsweise mindestens bifrequent, besonders vorzugsweise multifrequent sein. Vorteilafterweise kann auf diese Weise eine noch realistischere Simulation von Radarzielen erfolgen.

Gemäß einer zweiten bevorzugten Ausführungsform des ersten Aspekts der Erfindung ist zur Erzeugung emulierter Signale von bewegten Radarzielen das Modulationssignal so gewählt, dass es dem Radarsignal zumindest eine Signalkomponente aufmoduliert, wobei die zumindest eine Signalkomponente in zumindest einer Teilkomponente des zurückgesendeten Radarsignals einen Phasenverlauf erzeugt, wobei der Phasenverlauf dem Phasenverlauf entspricht, den ein reales bewegtes Radarziel aufweisen würde. Vorteilhafterweise lassen sich so insbesondere bewegte Radarziele noch realistischer nachbilden.

Gemäß einer weiteren bevorzugten Ausführungsform des ersten Aspekts der Erfindung ist die Frequenz des Modulationssignals zeitvariant. Vorteilhafterweise trägt dies insbesondere zu einer noch realitätsnäheren Simulation von Radarzielen bei.

Gemäß einer weiteren bevorzugten Ausführungsform des ersten Aspekts der Erfindung ändert das Modulationssignal seine Frequenz und/oder seine spektrale Zusammensetzung während der Dauer eines einzelnen Radar-Dauerstrichsignals, welches die Radartransponder-Anordnung empfängt und zurücksendet. Vorteilhafterweise kann auf diese Weise eine noch realitätsgetreuere Radarzielsimulation erreicht werden.

Gemäß einem zweiten Aspekt der Erfindung wird ein Verfahren zur Erzeugung emulierter Signale von Radarzielen geschaffen, wobei das Verfahren die folgenden Schritte aufweist: Empfangen eines Radarsignals, Generieren eines Steuersignals zur Erzeugung eines Modulationssignals zur Modulation des empfangenen Radarsignals und Zurücksenden des modulierten Signals. In diesem Kontext ist das Modulationssignal mehrwertig in seinem zeitlichen Signalverlauf vorgebbar, wobei für ein bewegtes Ziel, die Modulation eines statischen Ziels und zusätzlich eine Frequenzänderung über die Zeit verwendet wird, wobei dies für Ziele mit konstanter Bewegung eine affinlineare Funktion und für beschleunigte Ziele eine nichtlineare Funktion ist. Vorteilhafterweise können so Radarziele nicht nur besonders exakt, sondern auch sehr realistisch simuliert werden. Gemäß einer ersten bevorzugten Ausführungsform des zweiten Aspekts der Erfindung ist das Modulationssignal nicht monofrequent. Ferner mag das Modulationssignal bifrequent, vorzugsweise mindestens bifrequent, besonders vorzugsweise multifrequent sein. Vorteilafterweise kann auf diese Weise eine noch realistischere Simulation von Radarzielen erfolgen.

Gemäß einer zweiten bevorzugten Ausführungsform des zweiten Aspekts der Erfindung ist zur Erzeugung emulierter Signale von bewegten Radarzielen das Modulationssignal so gewählt, dass es dem Radarsignal zumindest eine Signalkomponente aufmoduliert, wobei die zumindest eine Signalkomponente in zumindest einer Teilkomponente des zurückgesendeten Radarsignals einen Phasenverlauf erzeugt, wobei der Phasenverlauf dem Phasenverlauf entspricht, den ein reales bewegtes Radarziel aufweisen würde. Vorteilhafterweise lassen sich so insbesondere bewegte Radarziele noch realistischer nachbilden.

Gemäß einer weiteren bevorzugten Ausführungsform des zweiten Aspekts der Erfindung ist die Frequenz des Modulationssignals zeitvariant. Vorteilhafterweise trägt dies insbesondere zu einer noch realitätsnäheren Simulation von Radarzielen bei.

Gemäß einer weiteren bevorzugten Ausführungsform des zweiten Aspekts der Erfindung ändert das Modulationssignal seine Frequenz und/oder seine spektrale Zusammensetzung während der Dauer eines einzelnen Radar-Dauerstrichsignals, welches empfangen und zurückgesendet wird. Vorteilhafterweise kann auf diese Weise eine noch realitätsgetreuere Radarzielsimulation erreicht werden.

BESCHREIBUNG BEVORZUGTER AUSFÜHRUNGSFORMEN

Nachfolgend wird eine detaillierte beispielhafte Beschreibung einiger Ausführungsformen der Erfindung unter Bezugnahme auf die Figuren der Zeichnung gegeben. Dabei zeigt:

Fig. 1    ein Ausführungsbeispiel eines Radarzielsimulators als beispielhaften Verwendungszweck der erfindungsgemäßen Radartransponder-Anordnung;

Fig. 2    ein Ausführungsbeispiel eines erfindungsgemäßen Radartransponders in monostatischer Ausführung;

Fig. 3    ein Ausführungsbeispiel eines erfindungsgemäßen Radartransponders in bistatischer Ausführung;

Fig. 4    eine beispielhafte Variante analoger Erzeugung des erfindungsgemäßen Modulationssteuersignals;

Fig. 5    eine beispielhafte Variante digitaler Erzeugung des erfindungsgemäßen Modulationssteuersignals;

Fig. 6    eine beispielhafte Ausführungsform eines passiven Radartransponders gemäß der Erfindung;

Fig. 7    eine weitere beispielhafte Ausführungsform eines passiven Radartransponders gemäß der Erfindung;

Fig. 8    eine beispielhafte Ausführungsform eines aktiven Radartransponders gemäß der Erfindung;

Fig. 9    eine weitere beispielhafte Ausführungsform eines aktiven Radartransponders gemäß der Erfindung;

Fig. 10    eine weitere beispielhafte Ausführungsform eines aktiven Radartransponders gemäß der Erfindung;

Fig. 11    eine weitere beispielhafte Ausführungsform eines aktiven Radartransponders gemäß der Erfindung; und

Fig. 12    ein beispielhaftes Flussdiagramm einer Ausführungsform eines Verfahrens zur Erzeugung emulierter von Radarzielen Dieses Flussdiagram ist nicht erfindungsgemäß und dient lediglich der Veranschaulichung.

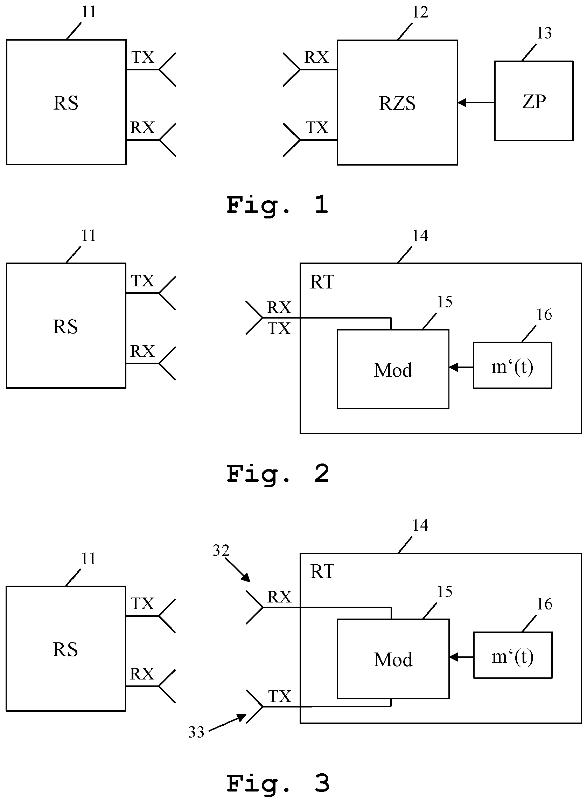

Fig. 1 zeigt die beispielhafte Verwendung der Erfindung in einem Radarzielsimulator 12, der mithilfe entsprechender Zielparameter 13 parametriert wird und Signale mit einem Radarsystem 11 austauscht.

Im Allgemeinen betrifft die Erfindung Anordnungen und Verfahren zur Erzeugung von statischen und bewegten Radarzielen in beliebiger Anzahl mithilfe eines modulierten Radar-Transponders insbesondere in einem Radarzielsimulator gemäß Fig. 1, wobei die emulierten Radarziele vorzugsweise eine frei wählbare Entfernung, Geschwindigkeit und Beschleunigung besitzen.

Mit der erfindungsgemäßen Ausgestaltung können Radarsignale vorteilhafterweise auf einfache Art und Weise auch für bewegte Ziele mit einem realistischen Phasenverlauf, insbesondere mit einer realistischen kontinuierliche Änderung der Phase über der Zeit wie sie auch von einen realen bewegten Radarziel erzeugt würde, erzeugt werden.

Im Folgenden werden die grundlegende erfindungsgemäße Anordnung des Radartransponders und des zugehörigen Radarzielsimulatsystemens, bevorzugte Ausführungsformen des Radar-Transponders sowie bevorzugte erfindungsgemäße Modulationssignalformen zur Emulation möglichst realistischer Signale von bewegten Radarzielen aufgezeigt.

Ein Radartransponder ist hierbei insbesondere ein System, das ein von einem Radar über eine Antenne (TX) ausgesandtes Signal mit einer Antenne (RX) empfängt, das empfangene Signal mit einem Modulationssignal m(t) moduliert und das modulierte Signal kohärent über eine Antenne (TX) an die Empfangsantenne (RX) des Radars zurücksendet.

Unter dem Begriff kohärent sei hier die Eigenschaft verstanden, dass die Phase des vom Transponder zurückgesendeten Signals in einem deterministischen Zusammenhang mit der Phase des empfangenen Signals steht.

Fig. 1 illustriert die prinzipielle Funktionsweise von Radarzielsimulatoren, beispielhaft ausgeführt mit getrennten Antennen zum Senden und Empfangen. Ferner sei erwähnt, dass durch Nutzung von Sende-Empfangsweichen beispielsweise mit Zirkulatoren oder Richtkopplern sowohl beim Radar als auch beim Transponder eine einzelne Antenne nicht nur zum Senden, sondern auch zum Empfangen genutzt werden kann.

Die Realisierung des Radartransponders und die erfindungsgemäße Signalmodulation kann auf unterschiedliche Art und Weise erfolgen. Diese Varianten seien im Folgenden kurz grundlegend dargelegt, bevor sie im Rahmen der weiteren Figuren im Detail erklärt werden.

Eine bevorzugte Ausführungsform ist ein sogenannter Backscatter-Transponder, bei dem die Reflexivität einer Struktur, zum Beispiel die einer Antenne, zeitabhängig moduliert wird. In diesem Kontext sei erwähnt, dass beispielsweise durch Variation der Fußpunktimpedanz einer Antenne Betrag und Phase eines von der Antenne reflektierten Signals moduliert werden kann.

Ferner sei darauf hingewiesen, dass ein solcher Backscatter-Transponder vorzugsweise mit steuerbaren mikromechanischen Spiegeln, oder mit steuerbaren Materialien, bei denen die Leitfähigkeit, die Permittivität und/oder die Permeabilität über ein Steuersignal beinflussbar ist, realisiert werden kann. Eine weitere bevorzugte Ausführungsform des Radartransponders verfügt über ein steuerbares dämpfendes oder verstärkendes Element, das heißt, beispielsweise über einen steuerbaren Verstärker oder ein steuerbares Dämpfungsglied, wobei das empfangene Radarsignal insbesondere über dieses Element übertragen wird und so durch das Steuersignal moduliert wird und danach das modulierte Signal an das Radar zurückgesendet wird.

Erfindungsgemäß werden ferner Modulationssignalformen vorgeschlagen, die zu Radartransponder-Antwortsignalen führen, die Signalanteile aufweisen, die insbesondere bezüglich ihres Phasenverlaufs realen Radarzielen entsprechen. Hierzu muss das Modulationssignal m(t) mehrwertig in seinem zeitlichen Signalverlauf einstellbar sein und es sollte insbesondere ein zeitvariantes Spektrum aufweisen bzw. beispielsweise seine Frequenz über der Zeit ändern.

Mehrwertigkeit bedeutet dabei insbesondere eine Vielzahl von möglichen Zuständen, die entweder kontinuierlich oder diskret innerhalb eines Wertebereichs verteilt sind und über der Zeit kontinuierlich oder zeitdiskret beliebig wählbar sind, so dass ein kontinuierliches Modulationssignal m(t) erzeugbar ist.

Das Modulationssignal m(t) kann hierbei rein analog, beispielsweise mit einem spannungsgesteuerten Oszillator, oder im Sinne einer digitalen Signalgenerierung etwa mit einem Digital-zu-Analogkonverter zeit- und amplitudendiskret erzeugt werden.

Für die Erzeugung eines einzelnen Radarziels wird erfindungsgemäß das Modulationssignal geeignet zu einem Radarziel gewünschter Entfernung und/oder Geschwindigkeit und/oder Beschleunigung gewählt. Jedes weitere Radarziel wird erfindungsgemäß linear der Gesamt-Modulationsfunktion hinzuaddiert.

Durch die erfindungsgemäßen Modulationsarten und Modulationssignalformen kann der Radartransponder folglich nicht nur einzelne Radarziele, sondern gleichzeitig mehrere Radarziele mit beliebigen und unterschiedlichen Bewegungsparametern erzeugen.

Vorteilhafterweise ist bei dem modulierten Radartransponders zur Erzeugung beliebig vorgebbarer Radarziele in beliebiger Anzahl keine Analog-zu-DigitalUmsetzung des empfangenen Signals erforderlich. Zudem ist es mit dem hier vorgestellten Ansatz möglich, sowohl die Simulation von Entfernung als auch von Geschwindigkeit und Beschleunigung ohne Verzögerungsleitungen von einem oder mehreren Zielen zu realisieren.

Ferner wird für die Bewegung des Ziels ein realistischer Phasenverlauf erzeugt, insbesondere eine kontinuierliche Phasenänderung über der Zeit. Die Figuren 2 und 3 zeigen jeweils beispielhaft den erfindungsgemäßen Radartransponder 14 in zwei möglichen Ausführungsvarianten, einerseits in monostatischer (Fig. 2) und andererseits in bistatischer (Fig. 3) Ausführung. Ein Modulator 15 ist hierbei jedes Bauelement, das geeignet ist, ein mehrwertiges Modulationssignal m(t) im Sinne der Erfindung zu erzeugen, welches insbesondere über ein Steuersignal bzw. Modulationssteuersignal m'(t) bestimmt wird, und damit das empfangene Signal zu modulieren.

Im Folgenden sei nun auf die entsprechende Verarbeitung der betreffenden Trägersignal eingegangen.

Gegeben sei ein Radarsystem, das ein phasenmoduliertes Dauerstrichsignal $s_{tx}(t)$ mit einem oder mehreren (C) Trägern mit der Amplitude $A_i$ aussendet. Das Radar-Sendesignal sei wie folgt definiert:

$$s_{tx}(t) = \sum_{i=1}^{C} e^{j\varphi_i(t)} A_i \, . \qquad\qquad (1)$$

Es sei darauf hingewiesen, dass - ohne Beschränkung der Allgemeinheit - alle Amplituden und Pfadverluste zur Vereinfachung der Darstellung jeweils auf eins normiert sind.

Bei einem normalen Radarbetrieb wird dieses Signal ausgesendet und an einem Ziel reflektiert und das reflektierte Signal von Radar empfangen und das empfangenen Signal mit der Phase des gesendeten Dauerstrichsignal $s_{tx}(t)$ verglichen und hierdurch ein sogenanntes Beatsignal $s_b(t)$ erzeugt. Der Vergleich erfolgt in Form einer Differenzbildung der Phasen des gesendeten Signals mit der des Empfangssignals. Die Phasendifferenzbildung geschieht häufig, aber nicht notwendigerweise, mit Hilfe eines Mischvorgangs bzw. mit Hilfe der Multiplikation des Empfangssignals mit dem Sendesignal und anschließender Tiefpassfilterung.

Die folgende Tabelle 1 zeigt die Sende-Phasenmodulationen $\varphi i(t)$ für verschiedene Radar-Verfahren, nämlich für das Dauerstrichradar (CW-Radar bzw. Continuous-Wave-Radar), für das frequenzmodulierte Dauerstrichradar (FMCW-Radar bzw. Frequency-Modulated Continuous-Wave-Radar) sowie für das Frequenzsprungradar (FSK-Radar bzw Frequency-Shift-Keying-Radar):

Tabelle 1: Sende-Phasenmodulationen verschiedener Radar-Verfahren.

| | CW-Radar | FMCW-Radar | FSK-Radar |
|---|---|---|---|
| $\varphi i(t)$ | $2\pi f_c t$ | $2\pi \left( f_c + \frac{\mu}{2} t \right) t$ | $2\pi ( f_c + \frac{\mu}{2} i \cdot \Delta T )$ |

Die Phase des Empfangssignals (Beat-Signals) ergibt sich bei einem einzelnen Radarziel in der zeitveränderlichen Entfernung d(t) gemäß

$$\varphi_B(t) = \varphi_i(t) - \varphi_i(t - \tau_{rt}(t)) \, . \qquad\qquad (2)$$

Die Signallaufzeit $\tau_{rt}(t)$ zwischen Sender, Ziel und Empfänger wird insbesondere durch die Art des Ziels bestimmt:

- Bei einem stehenden Ziel ist $\tau_{rt}(t) = \tau_{rt0}$. (3) Bei einem Ziele mit konstanter Geschwindigkeit ist $\tau_{rt}(t) = \tau_{rt0} + 2\frac{v}{c}t$ . (4)

- Bei einem Ziel mit konstanter Beschleunigung ist $\tau_{rt}(t) = \tau_{rt0} + 2\frac{v}{c}t + a\frac{v}{c}t^2$ . (5)

Das Folgende gilt ebenso für Ziele mit beliebiger Bewegung und Beschleunigung und damit einhergehend beliebiger Phasenmodulation.

Die nachfolgende Tabelle 2 zeigt Beispiele für die resultierenden Empfangs-Phasenmodulationen für verschiedene Ziele bezüglich des CW-Verfahrens sowie des FMCW-Verfahrens:

Tabelle 2: Empfangs-Phasenmodulationen verschiedener Radar-Verfahren.

| $\varphi_B(t)$ | CW | FMCW |
|---|---|---|
| Stehendes Ziel | $-2\pi f_c \tau_{rt0}$ | $2\pi\mu\tau_{rt0}t + 2\pi f \tau_{rt0} - \pi\mu\tau_{rt0}^2$ |
| Bewegtes Ziel mit konstanter Geschwindigkeit | $-2\pi f_c(\tau_{rt0} + 2vt)$ | $2\pi \left( \mu\tau_{rt0} \left( 1 - 2\frac{v}{c} \right) + 2\frac{v}{c} f_c \right) t$ $+ 2\pi\mu\frac{v}{c} \left( 1 - \frac{v}{2c} \right) t^2$ $+ 2\pi ( f_c\tau_{rt0} - \frac{1}{2}\mu\tau_{rt0}^2 )$ |

Mithilfe des oben dargestellten phasenmodulierten Dauerstrichsignalmodells gemäß der Erfindung lassen sich sämtliche Dauerstrich-Radare, beispielsweise monofrequente CW-Radare, FMCW-Radare, FSK-Radare, OFDM-Radare (OFDM = Orthogonal Frequency-Division Multiplexing), beschreiben.

Bei Dauerstrichsignalen kann zusätzlich eine Serie von L Signalen mit Dauer T erzeugt werden, um die Phasenänderung zwischen zwei Messungen und damit die Bewegung des Ziels zu messen:

$$s_{tx}(t) = \sum_{l=1}^{L} \sum_{i=1}^{C} e^{j\varphi_i(t-lT)}. \tag{6}$$

Eine beispielhafte Ausführungsform eines solchen Radars ist insbesondere das Chirp-Sequence FMCW-Radar.

Das ausgesendete Signal $s_{tx}(t)$ des Radarsignals wird vorzugsweise mit der Modulationsfunktion $m(t)$ multipliziert und anschließend wieder zurückgesendet. Das Empfangssignal wird mit dem Sendesignal-Oszillator in das Basisband gemischt und mit einem Tiefpass gefiltert. Daraus erhält man das nachfolgende Beat-Signal gemäß Formel:

$$s_b(t) = LP\{s_{tx}(t) \cdot s_{rx}(t-\tau_{rt})\} = LP\left\{\sum_{i=1}^{C} e^{j\varphi(t)} \cdot m(t)e^{j\varphi(t-\tau_{rt})}\right\}$$

$$= \sum_{i=1}^{C} m(t)e^{j(\varphi(t)-\varphi(t-\tau_{rt}))} \tag{7}$$

Dies entspricht insbesondere dem Basisband-Signal des jeweiligen Radar-Verfahrens, welches zusätzlich mit der Modulationsfunktion $m(t)$ multipliziert ist. Dadurch lassen sich die spektralen Eigenschaften des Signals und damit vorzugsweise Eigenschaften wie Abstand, Geschwindigkeit und Beschleunigung beeinflussen. Bei aktiven Transpondern ist der Betrag von $m(t)$ insbesondere größer gleich eins, bei passiven Transpondern kleiner oder im Idealfall gleich eins.

Typischerweise kann zur Modulation eine zweiwertige Funktion, die mit einer festen Frequenz periodisch umgeschaltet wird, verwendet werden. Für jedes Ziel wird hierbei ein eigener Transponder mit entsprechender Modulation benötigt. Die Modulationsfunktion ist im allgemeinen komplexen Fall ein Signal mit einer spektralen Komponente bei der Modulationsfrequenz $f_b$ und der Modulationsphase $\varphi_b$:

$$m(t) = e^{j(2\pi f_b t + \varphi_b)}. \tag{8}$$

Das resultierende Beat-Signal ist gegeben durch:

$$s_b(t) = \sum_{i=1}^{C} m(t)e^{j(\varphi(t)-\varphi(t-\tau_{rt}))} = \sum_{i=1}^{C} e^{j(\varphi(t)-\varphi(t-\tau_{rt})+2\pi f_b t + \varphi_b)}, \tag{9}$$

woraus folgender Phasenverlauf entsteht:

$$\varphi_B(t) = \varphi_i(t) - \varphi_i(t - \tau_{rt}(t)) + 2\pi f_b t + \varphi_b. \tag{10}$$

Die folgende Tabelle 3 zeigt die resultierenden Phasenverläufe exemplarisch für CW-Verfahren sowie für das FMCW-Verfahren:

Tabelle 3: Empfangs-Phasenmodulationen, die durch einen Zielsimulator gemäß CW- und FMCW-Verfahren erzeugt werden können.

| | CW | FMCW |
|---|---|---|
| $\varphi_B(t)$ | $-2\pi f_c \tau_{rt0} + 2\pi f_b t + \varphi_b$ | $2\pi\mu\tau_{rt0}t + 2\pi f\tau_{rt0} - \pi\mu\tau_{rt0}^2 + 2\pi f_b t + \varphi_b$ $= 2\pi(\mu\tau_{rt0} + f_b)t + 2\pi f\tau_{rt0}$ $- \pi\mu\tau_{rt0}^2 + \varphi_b$ |

Im direkten Vergleich mit Tabelle 2 erkennt man, dass für CW-Radarsyteme bewegte Ziele simuliert werden können, jedoch nicht für FMCW, da der folgende zeitabhängige Term nicht durch die konstante Modulationsphase $\varphi_b$ realisierbar ist:

$$\varphi_b \neq 4\pi\mu\frac{v}{c}\left(1 - \frac{v}{c}\right)t^2 \,. \tag{11}$$

Das erfindungsgemäße mehrwertige Modulationssignal m(t) besteht insbesondere aus einer Anzahl von N linear überlagerten Grund-Signalelementen $m_i(t)$ zur gleichzeitigen Simulation von N Zielen, welche für die Ziel-Parameter (Abstand, Geschwindigkeit und Beschleunigung) entsprechend ausgewählt und parametrisiert sind. Vorteilhafterweise können insbesondere durch eine zusätzliche Frequenzmodulation in m(t) die realistischen Phasenverläufe aus Tabelle 2 simuliert werden.

Ferner sei im Folgenden das entsprechende Modulationssignal für jeweils statische Ziele beschrieben.

Für ein statisches Ziel $i$ im simulierten Abstand $d_i$ wird zur Modulation ein Dauerstrich-Signal verwendet, dessen Frequenz $f_i$ der späteren Beat-Frequenz im Radar-System entspricht:

$$m_{s,i}(t) = e^{j(2\pi f_i t)} = e^{2\pi\frac{2d_i\mu}{c}t} \,. \tag{12}$$

Die Beat-Frequenz ist über die Radar-Parameter

$$\mu = \frac{B}{T}, \tag{13}$$

wobei $B$ der Bandbreite des Radars und $T$ der Periodendauer entspricht, proportional zur Signal-Laufzeit und damit zum Abstand. Die entsprechende Amplitude bzw. Dämpfung $A_i$ bestimmt insbesondere das spätere Signal-zu-RauschVerhältnis im Radarsystem.

Hieraus resultieren insbesondere die bereits in Tabelle 3 aufgeführten Empfangs-Phasenmodulationen.

Ferner sei im Folgenden auf das entsprechende Modulationssignal für jeweils bewegte Ziele eingegangen.

Für ein bewegtes Ziel $i$ wird die Modulation eines statischen Ziels und zusätzlich eine Frequenzänderung $R_i(t)$ über die Zeit verwendet, welche insbesondere proportional zur Bewegung des Ziels ist. Für Ziele mit konstanter Bewegung ist dies eine affin-lineare Funktion, für beschleunigte Ziele eine nicht-lineare, beispielsweise quadratische, Funktion. Dies führt zur nachfolgenden Formel:

$$m_{d,i}(t) = e^{j2\pi(f_i + R_i(t))t} \,. \tag{14}$$

Die Empfangs-Phasenmodulation in einem FMCW-Radar ist hierbei:

$$\varphi_B(t) = \varphi_i(t) - \varphi_i\left(t - \tau_{rt}(t)\right) + 2\pi f_i t + 2\pi R_i(t)t^2 = 2\pi\mu\tau_{rt0}t + 2\pi f\tau_{rt0} -$$
$$\pi\mu\tau_{rt0}^2 + 2\pi f_i t + 2\pi R_i(t)t^2 = 2\pi(\mu\tau_{rt0} + f_i)t + 2\pi f\tau_{rt0} - \pi\mu\tau_{rt0}^2 + 2\pi R_i(t)t \,. \tag{15}$$

Im direkten Vergleich mit Tabelle 2 sieht man, dass insbesondere durch den zusätzlichen Term $2\pi R_i(t)t^2$ beliebige Phasenverläufe erzeugt werden können. Für eine Bewegung mit konstanter Geschwindigkeit wird $R_i(t)$ exemplarisch so gesetzt, dass folgende Gleichung gilt:

$$R_i(t) = 4\pi\mu\frac{v}{c}\left(1 - \frac{v}{c}\right)t \,. \tag{16}$$

Da $R_i(t)$ beliebig gewählt werden kann, sind alle denkbaren Empfangs-Phasenmodulationen und damit erfindungsgemäß beliebige Ziel-Bewegungen realisierbar.

Im Falle nicht-idealer Modulations-Grundsignale sei angemerkt, dass es zur Realisierung der Modulations-Grundsignale $m_{s,i}$ und $m_{d,i}(t)$ insbesondere ausreicht, ein Signal zu erzeugen, welches zumindest eine spektrale Komponente besitzt, die der obigen idealen Beschreibung der Signale entspricht. Daher ist beispielsweise auch eine Rechteck- oder Sägezahnschwingung mit der entsprechenden Grundfrequenz anwendbar.

Bezüglich eines vollständigen Modulationssignals ist festzuhalten, dass sich für N statische und M bewegte Ziele das Modulationssignal m(t) als lineare Überlagerung aller Grund-Signalelemente zusammensetzt:

$$m(t) = \sum_{i=1}^{N} m_{s,i}(t) + \sum_{l=1}^{M} m_{d,l}(t). \qquad (17)$$

Nach der Abwärtsmischung im Radar erhält man das entsprechende Beat-Signal $s_b(t)$:

$$s_b(t) = cos(2\pi f_b t) \cdot \left( \sum_{i=1}^{N} m_{s,i}(t) + \sum_{l=1}^{M} m_{d,l}(t) \right) = \sum_{i=1}^{N} cos(2\pi f_b t)\, m_{s,i}(t) +$$

$$\sum_{l=1}^{M} cos(2\pi f_b t)\, m_{d,l}(t). \qquad (18)$$

Die Modulation erzeugt N spektrale Komponenten im Basisband an den Ziel-Positionen mit den entsprechenden Doppler-Verschiebungen. Insbesondere bei reellen Modulationen entstehen hierbei für jedes Ziel zwei Seitenbänder, von denen eines beim gewünschten Abstand vorzufinden ist. Bei zu geringem Transponder-Abstand vereinen sich die beiden Bänder zu einem gemeinsamen Ziel bei der gewünschten Abstands-Frequenz.

Für komplexe m(t) und Einseitenbandmodulation können auch Ziele mit einem Seitenband erzeugt werden. Eine solche komplexwertige Modulation wird beispielsweise durch Verwendung von zumindest zwei reellwertigen Modulatoren erzeugt. Als Ergänzung sei angemerkt, dass bei Verwendung einer reellwertigen Modulationsfunktion durch Messung des Abstands zwischen den zwei Seitenbändern der echte Abstand vom Radar zum Transponder bestimmbar ist.

Bezüglich der Erzeugung der Steuerfunktion m'(t) ist ferner festzuhalten, dass die Modulationsfunktion m(t) aus der Überlagerung einzelner Grund-Signalelemente besteht, welche für jedes Ziel parametrisiert und zur Gesamtmodulation hinzuaddiert werden. Die Modulationsfunktion erhält man aus der Steuerfunktion m'(t), welche einen entsprechenden Modulator des Radar-Transponders steuert. Die Steuerfunktion kann entweder analog oder mittels digitaler Synthese erzeugt werden.

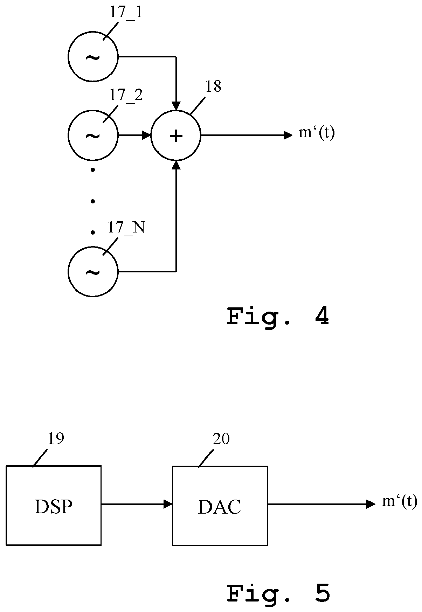

Bei der analogen Variante gemäß Fig. 4 müssen dabei N Signalquellen, beispielsweise Oszillatoren 17_1, 17_2, ..., 17_N mit fester Frequenz oder einstellbare Phasenregelschleifen (PLL), aufaddiert werden. Die Addition kann durch einen Summierverstärker 18 realisiert werden und bildet damit das elektrische Steuersignal m'(t).

Die digitale Variante gemäß Fig. 5 besteht aus einem digitalen Signalprozessor (DSP) 19 und einem Digital-Zu-Analog-Umsetzer (DAC) 20. Der DSP erzeugt das vollständige Steuersignal m'(t) numerisch und erzeugt mithilfe des DAUs das elektrische Signal. Die digitale Variante erleichtert insbesondere die entsprechende Rekonfigurierbarkeit, so dass die Anzahl und die Parameter der Ziele dynamisch verändert werden können.

Weiterhin kann grundsätzlich zwischen einem passiven und aktiven Radartransponder, insbesondere Backscatter-Transponder, unterschieden werden.

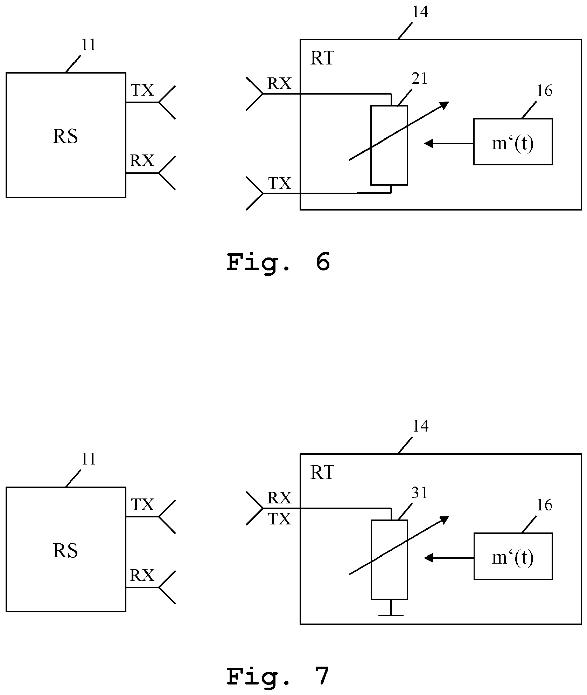

Ein passiver Transponder gemäß Fig. 6 umfasst ein variables Dämpfungsglied 21 oder für komplexwertige Modulationen zusätzlich einen variablen Phasenschieber, welche entweder analog oder digital eingestellt werden. Die digitale Einstellung dient zur einfachen ReKonfiguration, ist aber prinzipiell nicht notwendig. Die Dämpfung wird anhand der Modulationsfunktion m(t) im linearen Bereich des Glieds eingestellt. Dadurch erhält man im Radarsystem die gewünschten Ziele.

Alternativ zeigt Fig. 7 einen passiven Transponder, welcher mithilfe einer einstellbaren Fußpunktimpedanz 31 in Betrag und gegebenenfalls Phase die Modulation realisiert.

Als aktiver Transponder kann entweder ein Verstärker oder ein regenerativer Oszillator verwendet werden. Dieser verstärkt zusätzlich das empfangene Signal, bevor es in der Amplitude moduliert und wieder ausgesendet wird. Dabei kann sowohl die Ausgangs-Leistung des Oszillator als auch analog zum passiven Transponder die ausgesendete Leistung mithilfe eines Dämpfungsglieds bzw. Phasenschiebers moduliert werden.

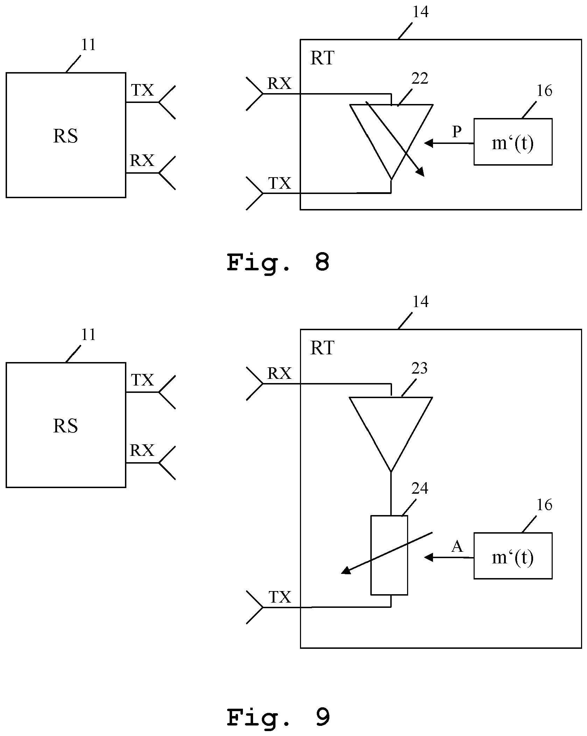

Beispielhaft zeigt Fig. 8 einen aktiven Transponder auf Basis eines einstellbaren Verstärkers, welcher die Modulation durch Einstellen der Ausgangsleistung (P) realisiert, während Fig. 9 einen aktiven Transponder auf Basis eines Verstärkers mit fester Ausgangsleistung illustriert, welcher die Modulation durch Einstellen der ausgangsseitigen Dämpfung (A) bzw. Phasenschiebung realisiert.

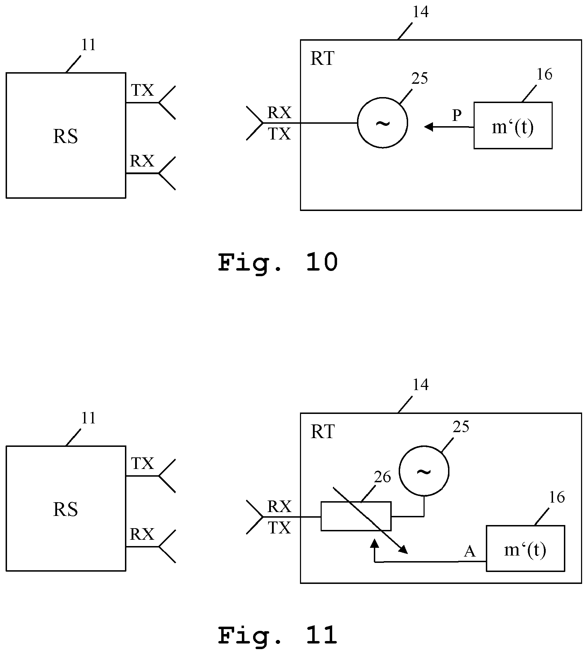

Alternativ zeigt Fig. 10 ferner einen aktiven Transponder auf Basis eines regenerativen Oszillators 25, beispielsweise ausgeführt wie in US 7,242,259 B2 oder EP 1 297 357 B1 darstellt, welcher die Modulation durch Einstellen der Ausgangsleistung (P) realisiert, während Fig. 11 einen aktiven Transponder auf Basis eines regenerativen Oszillators mit fester Ausgangsleistung darstellt, welcher die Modulation durch Einstellen der ausgangsseitigen Dämpfung (A) bzw.

Phasenschiebung realisiert.

An dieser Stelle sei ingesamt festgehalten, dass mithilfe der oben dargelegten Ausführungsbeispiele verdeutlicht werden konnte, dass es die Erfindung ermöglicht, insbesondere durch lineare Überlagerung der einzelnen Modulationssignale beliebig viele Ziele zu simulieren. Ferner können durch eine Frequenzmodulation beliebige Bewegungen des Ziels, insbesondere sowohl Bewegungen mit konstanter Geschwindigkeit als auch beschleunigte Bewegungen, realisiert werden. Der Abstand kann hierbei kontinuierlich verändert werden. Die Auflösung ist hierbei vorteilhafterweise nur durch die Auflösung der analogen oder digitalen Signalerzeugung beschränkt. Dadurch wird ein Springen der Ziele weiter vorteilhafterweise vermieden. Die vom entsprechenden Zielsimulator erzeugten Radarechos werden dadurch realitätsnäher nachgebildet. Auch die Geschwindigkeit und Beschleunigung lassen sich erfindungsgemäß durch entsprechende Anpassung der Frequenzmodulation in kontinuierlichen Werten simulieren. Dabei kann eine hohe Plausibilität des Signals gewährleistet werden, da sowohl die zeitliche Dauer des Signals als auch der Frequenzversatz konsistent nachgebildet werden.

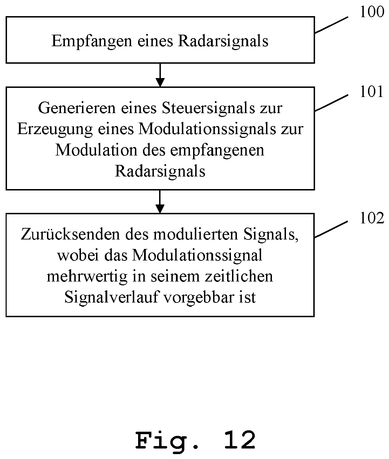

Abschließend zeigt Fig. 12 ein beispielhaftes Flussdiagramm eines Verfahrens zur Erzeugung emulierter Signale von Radarzielen. Dieses Flussdiagram ist nicht erfindungsgemäß und dient lediglich der Veranschaulichung. In einem ersten Schritt 100 wird ein Radarsignal empfangen. Gemäß einem zweiten Schritt 101 wird dann ein Steuersignal zur Erzeugung eines Modulationssignals zur Modulation des empfangenen Radarsignals generiert. Anschließend wird in einem dritten Schritt 102 das modulierte Signal zurückgesendet, wobei das Modulationssignal mehrwertig in seinem zeitlichen Signalverlauf vorgebbar ist.

Ferner gelten alle im Rahmen der Figuren 1 bis 11 dargestellten Aspekte für das Verfahren gemäß Fig. 12 in analoger Weise.

Die Erfindung ist nicht auf die vorstehend diskutierten Ausführungsbeispiele beschränkt. Alle in der Beschreibung beschriebenen Merkmale oder in den Patentansprüchen beanspruchten Merkmale oder in der Zeichnung gezeichneten Merkmale sind im Rahmen dieser Erfindung beliebig miteinander kombinierbar, solange die resultierende Kombination unter den Schutzumfang der angefügten Ansprüche fällt.

**Patentansprüche**

1. Eine Radartransponder-Anordnung (14) zur Erzeugung emulierter Signale von Radarzielen, wobei die Radartransponder-Anordnung (14) aufweist:

   eine Empfangseinheit (32) zum Empfangen eines Radarsignals,
   einen Signalgenerator (16) zur Generierung eines Steuersignals (m'(t)) zur Erzeugung eines Modulationssignals zur Modulation des empfangenen Radarsignals,
   eine Sendeeinheit (33) zum Zurücksenden des modulierten Signals,

   wobei das Modulationssignal mehrwertig in seinem zeitlichen Signalverlauf vorgebbar ist,
   wobei der Signalgenerator (16) für ein bewegtes Ziel ($i$) die Modulation eines statischen Ziels und zusätzlich eine Frequenzänderung ($R_i(t)$) über die Zeit verwendet,
   wobei dies für Ziele mit konstanter Bewegung eine affin-lineare Funktion und für beschleunigte Ziele eine nicht-lineare Funktion ist.

2. Die Radartransponder-Anordnung (14) nach Anspruch 1, wobei das Modulationssignal nicht monofrequent ist.

3. Die Radartransponder-Anordnung (14) nach Anspruch 1 oder 2,
   wobei zur Erzeugung emulierter Signale von bewegten Radarzielen das Modulationssignal so gewählt ist, dass es dem Radarsignal zumindest eine Signalkomponente aufmoduliert, wobei die zumindest eine Signalkomponente in zumindest einer Teilkomponente des zurückgesendeten Radarsignals einen Phasenverlauf erzeugt, wobei der Phasenverlauf dem Phasenverlauf entspricht, den ein reales bewegtes Radarziel aufweisen würde.

4. Die Radartransponder-Anordnung (14) nach einem der Ansprüche 1 bis 3,
   wobei die Frequenz des Modulationssignals zeitvariant ist.

5. Die Radartransponder-Anordnung (14) nach einem der Ansprüche 1 bis 4,
   wobei während der Dauer eines einzelnen Radar-Dauerstrichsignals, welches die Radartransponder-Anordnung (14) empfängt und zurücksendet, das Modulationssignal seine Frequenz und/oder seine spektrale Zusammensetzung ändert.

6. Ein Verfahren zur Erzeugung emulierter Signale von Radarzielen, wobei das Verfahren die folgenden Schritte aufweist:

> Empfangen eines Radarsignals,
> Generieren eines Steuersignals (m'(t)) zur Erzeugung eines Modulationssignals zur Modulation des empfangenen Radarsignals,
> Zurücksenden des modulierten Signals,
>
>> wobei das Modulationssignal mehrwertig in seinem zeitlichen Signalverlauf vorgebbar ist,
>> wobei für ein bewegtes Ziel ($i$) die Modulation eines statischen Ziels und zusätzlich eine Frequenzänderung ($R_i(t)$) über die Zeit verwendet wird,
>> wobei dies für Ziele mit konstanter Bewegung eine affin-lineare Funktion und für beschleunigte Ziele eine nicht-lineare Funktion ist.

7. Das Verfahren nach Anspruch 6,
wobei das Modulationssignal nicht monofrequent ist.

8. Das Verfahren nach Anspruch 6 oder 7,
wobei zur Erzeugung emulierter Signale von bewegten Radarzielen das Modulationssignal so gewählt ist, dass es dem Radarsignal zumindest eine Signalkomponente aufmoduliert, wobei die zumindest eine Signalkomponente in zumindest einer Teilkomponente des zurückgesendeten Radarsignals einen Phasenverlauf erzeugt, wobei der Phasenverlauf dem Phasenverlauf entspricht, den ein reales bewegtes Radarziel aufweisen würde.

9. Das Verfahren nach einem der Ansprüche 6 bis 8,
wobei die Frequenz des Modulationssignals zeitvariant ist.

10. Das Verfahren nach einem der Ansprüche 6 bis 9,
wobei während der Dauer eines einzelnen Radar-Dauerstrichsignals, welches empfangen und zurückgesendet wird, das Modulationssignal seine Frequenz und/oder seine spektrale Zusammensetzung ändert.

**Claims**

1. A radar transponder arrangement (14) for generating emulated radar target signals, wherein the radar transponder arrangement (14) comprises:

> a receiving unit (32) for receiving a radar signal,
> a signal generator (16) for generating a control signal (m'(t)) for the generation of a modulation signal for modulating the received radar signal,
> a transmitting unit (33) for returning the modulated signal,
> wherein the modulation signal can be predetermined in a multivalued manner in its temporal signal profile,
> wherein the signal generator (16) uses the modulation of a static target and in addition a frequency change ($R_i(t)$) over time for a moving target ($i$),
> wherein this is an affine linear function for targets with constant motion and a non-linear function for accelerated targets.

2. The radar transponder arrangement (14) according to claim 1, wherein the modulation signal is not monofrequent.

3. The radar transponder arrangement (14) according to claim 1 or 2,
wherein for the generation of emulated signals of moving radar targets the modulation signal is selected in such a way that it modulates at least one signal component to the radar signal, wherein the at least one signal component in at least one partial component of the returned radar signal generates a phase profile, wherein the phase profile corresponds to the phase profile which a real moving radar target would have.

4. The radar transponder arrangement (14) according to any of claims 1 to 3,
wherein the frequency of the modulation signal is time variant.

5. The radar transponder arrangement (14) according to any of claims 1 to 4,

EP 3 734 325 B1

wherein during the duration of a single radar continuous wave signal, which the radar transponder arrangement (14) receives and returns, the modulation signal changes its frequency and/or its spectral composition.

**6.** A method for generating emulated radar target signals, wherein the method comprises the following steps:

receiving a radar signal,
generating a control signal ($m$'($t$)) for the generation of a modulation signal for modulating the received radar signal,
returning the modulated signal,
wherein the modulation signal can be predetermined in a multivalued manner in its temporal signal profile,
wherein the modulation of a static target and in addition a frequency change ($R_i$($t$)) over time is used for a moving target ($i$),
wherein this is an affine linear function for targets with constant motion and a non-linear function for accelerated targets.

**7.** The method according to claim 6,
wherein the modulation signal is not monofrequent.

**8.** The method according to claim 6 or 7,
wherein for the generation of emulated signals of moving radar targets the modulation signal is selected in such a way that it modulates at least one signal component to the radar signal, wherein the at least one signal component in at least one partial component of the returned radar signal generates a phase profile, wherein the phase profile corresponds to the phase profile which a real moving radar target would have.

**9.** The method according to any of claims 6 to 8, wherein the frequency of the modulation signal is time variant.

**10.** The method according to any of claims 6 to 9,
wherein during the duration of a single radar continuous wave signal, which is received and returned, the modulation signal changes its frequency and/or its spectral composition.

**Revendications**

**1.** Agencement de transpondeur radar (14) destiné à produire des signaux émulés de cibles-radars, dans lequel l'agencement de transpondeur radar (14) présente :

une unité de réception (32) pour recevoir un signal radar,
un générateur de signaux (16) pour générer un signal de commande (m'(t)) afin de produire un signal de modulation pour la modulation du signal radar reçu,
une unité d'envoi (33) pour renvoyer le signal modulé,
dans lequel le signal de modulation peut être prédéfini de façon polyvalente dans sa forme d'onde temporelle,
dans lequel le générateur de signaux (16) utilise, dans le temps et pour une cible en mouvement ($i$), la modulation d'une cible statique et en complément une modification de fréquence ($R_i$(t)),
dans lequel cela est une fonction affine linéaire pour des cibles avec mouvement constant et une fonction non linéaire pour des cibles accélérées.

**2.** Agencement de transpondeur radar (14) selon la revendication 1,
dans lequel le signal de modulation n'est pas à monofréquence.

**3.** Agencement de transpondeur radar (14) selon la revendication 1 ou 2,
dans lequel, pour la production de signaux émulés de cibles-radars en mouvement, le signal de modulation est sélectionné de sorte qu'il module au moins une composante de signal sur le signal radar, dans lequel la au moins une composante de signal produit un déroulé de phase dans au moins une composante partielle du signal radar renvoyé, dans lequel le déroulé de phase correspond au déroulé de phase qu'une cible-radar réelle en mouvement présenterait.

**4.** Agencement de transpondeur radar (14) selon l'une des revendications 1 à 3,
dans lequel la fréquence du signal de modulation est variable dans le temps.

11

**5.** Agencement de transpondeur radar (14) selon l'une des revendications 1 à 4,
dans lequel, pendant la durée d'un unique signal radar à onde continue, lequel reçoit et renvoie l'agencement de transpondeur radar (14), le signal de modulation modifie sa fréquence et/ou sa composition spectrale.

**6.** Procédé destiné à produire des signaux émulés de cibles-radars, dans lequel le procédé présente les étapes suivantes :

réception d'un signal radar,
génération d'un signal de commande (m'(t)) afin de produire un signal de modulation pour la modulation du signal radar reçu,
renvoi du signal modulé,
dans lequel le signal de modulation peut être prédéfini de façon polyvalente dans sa forme d'onde temporelle,
dans lequel la modulation d'une cible statique et en complément une modification de fréquence ($R_i(t)$) est utilisée, dans le temps et pour une cible en mouvement (i),
dans lequel cela est une fonction affine linéaire pour des cibles avec mouvement constant et une fonction non linéaire pour des cibles accélérées.

**7.** Procédé selon la revendication 6,
dans lequel le signal de modulation n'est pas à monofréquence.

**8.** Procédé selon la revendication 6 ou 7,
dans lequel, pour la production de signaux émulés de cibles-radars en mouvement, le signal de modulation est sélectionné de sorte qu'il module au moins une composante de signal sur le signal radar, dans lequel la au moins une composante de signal produit un déroulé de phase dans au moins une composante partielle du signal radar renvoyé, dans lequel le déroulé de phase correspond au déroulé de phase qu'une cible-radar réelle en mouvement présenterait.

**9.** Procédé selon l'une des revendications 6 à 8,
dans lequel la fréquence du signal de modulation est variable dans le temps.

**10.** Procédé selon l'une des revendications 6 à 9,
dans lequel, pendant la durée d'un unique signal radar à onde continue, lequel est reçu et renvoyé, le signal de modulation modifie sa fréquence et/ou sa composition spectrale.

Fig. 1

Fig. 2

Fig. 3

17_1

17_2

18

17_N

m'(t)

## Fig. 4

19

20

DSP

DAC

m'(t)

## Fig. 5

Fig. 6

Fig. 7

**Fig. 8**

**Fig. 9**

Fig. 10

Fig. 11

Empfangen eines Radarsignals — 100

Generieren eines Steuersignals zur Erzeugung eines Modulationssignals zur Modulation des empfangenen Radarsignals — 101

Zurücksenden des modulierten Signals, wobei das Modulationssignal mehrwertig in seinem zeitlichen Signalverlauf vorgebbar ist — 102

Fig. 12

**IN DER BESCHREIBUNG AUFGEFÜHRTE DOKUMENTE**

**In der Beschreibung aufgeführte Patentdokumente**

- US 3792475 A
- US 7242259 B2
- EP 1297357 B1


**In der Beschreibung aufgeführte Nicht-Patentliteratur**

- A low-cost multi-target simulator for FMCW radar system calibration and testing. **SCHEIBLHOFER WERNER et al.** 2017 47TH EUROPEAN MICROWAVE CONFERENCE (EUMC). EUROPEAN MICROWAVE ASSOCIATION
- Design of a Sensor Agnostic FMCW-Compatible Transponder for Automotive Applications. **REHAMMAR ROBERT et al.** 2018 IEEE CONFERENCE ON ANTENNA MEASUREMENTS & APPLICATIONS (CAMA). IEEE